# EUROPEAN PATENT APPLICATION

(11) **EP 4 485 881 A1**
(43) Date of publication of application: **01.01.2025**
(21) Application number: 24185130.2
(22) Date of filing: 27.06.2024
(51) Int. Cl.: H04L 41/22, H04L 41/28, H04L 41/0654

(54) **A REMOTE SYSTEM AND METHOD**

(30) Priority: 29.06.2023 JP 2023106711
(71) Applicant: CANON KABUSHIKI KAISHA, Tokyo 146-8501 (JP)
(72) Inventor: OHASHI, Toshio, Tokyo, 146-8501 (JP)
(74) Representative: Canon Europe Limited

(57) **Abstract**

A remote system for a network device diagnosis system that diagnoses an abnormality in a network device includes an acceptance means for accepting a login of a user to the remote system, and a provision means for providing a user having logged in to the remote system with a diagnosis result screen for the network device, wherein, on the diagnosis result screen, in a case where the network device supports acceptance of an operation via a network and an authority of the logged in user is an authority required to execute an operation necessary for the network device, control for accepting an instruction of the operation via the network is executed.

## Description

### TECHNICAL FIELD

The present disclosure relates to a remote system and method for diagnosing an abnormality in a network device.

### BACKGROUND

Description of the Related Art: Against a background of advancement in cloud and Internet of Things (IoT) technologies, the number of systems for remotely diagnosing and repairing a network device or system has been increasing recently. In many cases, a general flow of processing from detection of an occurrence of a problem in a network device or system to a resolution of the problem includes steps of detecting a problem, diagnosing a cause of the problem, performing an operation based on a diagnosis result, and verifying whether the network device or system has been properly restored. Focusing on the step of performing the operation after a diagnosis, the operation for restoration is divided into two types of operations, namely an operation that can be remotely performed via a network, and an operation that needs to be performed in an environment in which the network device is placed (e.g., on-site).

A technique for determining an operator to perform an operation on a network device based on an importance level of a failure detected in the device and transmitting a notification about the determined operator is described in Japanese Patent Application Laid-Open No. 2022-44845.

To appropriately provide an operation procedure, or a mechanism for requesting an operation based on a network device diagnosis result, there are points of the procedure which can be considered during operation of the system. These points may include, for example, capabilities of a target device (e.g., whether the target device includes a remote operation means) and whether the profile of a person in charge of the operation indicates that the person has an execute authority. For example, the profile may include a user's role and skill level, and information indicating whether the user has a qualification for an operation.

However, the related art has not provided any system for performing remote diagnosis and repairing, including an appropriate remote operation based on some of the points to be considered.

### SUMMARY

According to a first aspect of the present disclosure, there is provided a remote system for a network device diagnosis system, the network device diagnosis system is suitable (e.g., configurable) for diagnosing an abnormality in a network device, the remote system comprising: an acceptance means for accepting a login of a user to the remote system; and a provision means for providing a user logged in to the remote system (e.g., a logged in user, or a log-in user) with a diagnosis result screen for the network device, wherein, on the diagnosis result screen, in a case where the network device supports acceptance of an operation via a network and an authority of the login user is an authority required to execute an operation necessary for the network device, control for accepting an instruction of the operation via the network is executed.

According to a second aspect of the present disclosure, there is provided a method for a remote system for a network device diagnosis system, the network device diagnosis system is for diagnosing an abnormality in a network device, the method comprising: accepting a login of a user to the remote system; and providing a user having logged in to the remote system (e.g., a logged in user, or a log-in user) with a diagnosis result screen for the network device, wherein, on the diagnosis result screen, in a case where the network device supports acceptance of an operation via a network and an authority of the logged in user is an authority required to execute an operation necessary for the network device, control for accepting an instruction of the operation for the network device via the network is executed.

Optional features will now be set out. These are applicable singly or in any combination with any aspect of the disclosure.

The acceptance means may be configured to accept a request from a user to login to the remote system. Consequently, the logged in user may be a user whose request to login to the remote system has been accepted by the acceptance means. The control for accepting an instruction of the operation via the network may comprise an instruction means (e.g., a user interface element, such as a button) for instructing the network device to perform the operation via the network. The instruction means may be disposed on the diagnosis result screen. In this way, the user (e.g., the logged in user) may input an instruction to execute the operation via the network.

The authority of the logged in user may include at least one of a role or a skill level of the logged in user.

On the diagnosis result screen, another control (e.g., a second control) for accepting an instruction to request another user (e.g., a second user) to perform the operation may be executed on a basis that the operation necessary for the network device is unavailable with the authority of the logged in user. The other user may have a role different from the role of the logged in user. The other control may comprise a means for requesting that the other user performs the operation. The requesting means may be disposed on the diagnosis result screen (e.g., displayed as a UI element, such as a button). In this way, the user (e.g., the logged in user) may receive notification that another user is required to proceed with the current operation, and/or may input an instruction to request that responsibility for performing an operation is transferred to the other user.

On the diagnosis result screen, another control (e.g., a third control) for accepting an instruction to provide a screen to explain detailed contents of the operation may be executed on a basis that the operation necessary for the network device is an operation required to be performed at a location where the network device is placed. The other control may comprise an instruction means for providing a screen to explain detailed contents of the operation. The instruction means may be disposed on the diagnosis result screen (e.g., displayed as a UI element, such as a button). In this way, the user (e.g., the logged in user) can instruct the system to provide a detailed explanation of how to perform a particular operation.

Any feature in one aspect of the disclosure may be applied to other aspects of the disclosure, in any appropriate combination. In particular, method aspects may be applied to apparatus/device/unit aspects, and vice versa. It will be understood that features implemented in hardware may be implemented in software, and vice versa. Any reference to software and hardware features herein should be construed accordingly. For example, in accordance with other aspects of the disclosure, there are provided a computer program comprising instructions which, when the program is executed by one or more processing units, cause the one or more processing units to carry out the method of any aspect or example described above and a computer readable storage medium carrying the computer program.

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or preceding examples may be combined in any suitable combination to provide further examples, except where such a combination is clearly impermissible or expressly avoided. Further features of the present disclosure will become apparent from the following description of example embodiments with reference to the attached drawings.

### BRIEF DESCRIPTION OF THE DRAWINGS

Fig. 1 is a block diagram illustrating a system configuration and a hardware configuration according to first and second example embodiments.
Fig. 2 is a block diagram illustrating a software configuration according to the first and second example embodiments.
Figs. 3A and 3B illustrate database configurations according to the first example embodiment.
Fig. 4 is a flowchart illustrating processing performed by an application server according to the first example embodiment to determine and display a remote operation means.
Fig. 5 illustrates a screen example of a diagnosis result display screen (customer administrator) according to the first example embodiment.
Fig. 6 illustrates a screen example of a diagnosis result display screen (call center operator) according to the first example embodiment.
Fig. 7 illustrates a screen example of a diagnosis result display screen (service technician) according to the first example embodiment.
Fig. 8 illustrates a screen example of the diagnosis result display screen (service technician) according to the first example embodiment.
Fig. 9 illustrates a database configuration according to the second example embodiment.
Fig. 10 is a flowchart illustrating processing performed by the application server according to the second example embodiment to determine and display the remote operation means.

### DESCRIPTION OF THE EMBODIMENTS

Example embodiments of the present disclosure will be described below with reference to the drawings.

A network device diagnosis system according to a first example embodiment of the present disclosure will be described. In the first example embodiment, a remote system (e.g., an application server 100) that provides processing described below as a cloud service in the network device diagnosis system is described in detail. As an example of a network device to be diagnosed by the network device diagnosis system, a multifunction peripheral (MFP) is described in the first example embodiment. Examples of the network device include devices other than an MFP, such as a printer and a facsimile (FAX). The network device diagnosis system is a system for performing a diagnosis and an operation on a device with an abnormality, such as a failure and an error, in a network device to be managed based on a contract with a customer or the like.

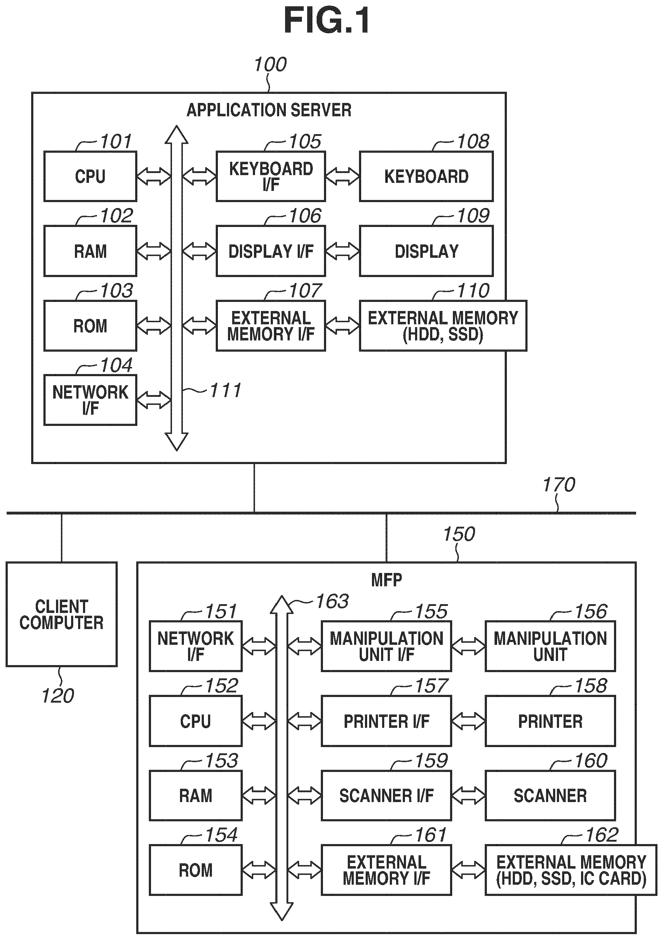

Fig. 1 is a block diagram illustrating a system configuration and a hardware configuration of the network device diagnosis system according to the present example embodiment.

The network device diagnosis system includes the application server 100, a client computer 120, and an MFP 150, which are connected via a network 170. An example of the network 170 is the Internet. In the present embodiment, a general-purpose computer that implements the application server 100 is configured using hardware resources supplied on demand by a virtualization technique. The client computer 120 has a configuration of a general-purpose computer.

The application server 100 includes a central processing unit (CPU) 101 that executes processing based on an application program and the like stored in a read-only memory (ROM) 103 or an external memory 110. The CPU 101 controls devices connected to a system bus 111 in an integrated manner. The CPU 101 executes various kinds of data processing by opening various kinds of windows registered based on commands issued via a mouse cursor (not illustrated) or the like on a display 109. A random access memory (RAM) 102 functions as a main memory, a working area, or the like for the CPU 101. The ROM 103 functions as a storage area for a basic input/output (I/O) program and the like. An operating system (OS) program (hereinafter, referred to as OS), which is a control program for the CPU 101, and the like are stored in the ROM 103 or the external memory 110. Further, a file and other various kinds of data to be used for processing based on the above-described application program and the like are also stored in the ROM 103 or the external memory 110.

A network interface (I/F) 104 is connected to the network 170 to establish network communication. A keyboard I/F 105 controls input from a keyboard 108 or a pointing device (not illustrated). A display I/F 106 controls display on the display 109. An external memory I/F 107 controls access to the external memory 110, such as a hard disk drive (HDD) and a solid-state drive (SSD). The external memory 110 stores a boot program, various kinds of applications, a user file, an edited file, and the like. The application server 100 operates in a state where the CPU 101 is executing the basic I/O program and the OS written into the ROM 103 or the external memory 110. The basic I/O program is written into the ROM 103, and the OS is written into the ROM 103 or the external memory 110. When the computer is powered on, the OS is written into the RAM 102 from the ROM 103 or the external memory 110 by an initial program loading function in the basic I/O program, so that operation of the OS is started. The system bus 111 connects the devices to each other.

Hardware resources, such as the CPU 101, the ROM 103, and the external memory 110, that constitute the application server 100 are supplied on demand by a virtualization technique. By the hardware resources being supplied on demand by the virtualization technique, the application server 100 is configured as a virtual server in a cloud computing environment.

A hardware configuration of the client computer 120 is similar to that of the application server 100, and thus description thereof is omitted.

The MFP 150 includes a network I/F 151 to connect to the network 170 to establish network communication.

A CPU 152 outputs an image signal as output information to a printer 158 via a printer I/F 157 connected to a system bus 163 based on a control program or the like. The control program is stored in a ROM 154, an external memory 162, or the like. The CPU 152 is configured to perform communication processing with the computer via the network I/F 151 and to transmit a notification, such as information within the MFP 150, to the application server 100. Further, the CPU 152 executes processing based on an application program and the like stored in the ROM 154 or the external memory 162. A RAM 153 functions as a main memory, a working area, or the like for the CPU 152, and is configured to be able to extend the memory capacity using an optional RAM connected to an extension port (not illustrated). The RAM 153 is used as an output information loading area, an environmental data storage area, a non-volatile RAM (NVRAM), or the like.

The ROM 154 or the external memory 162, such as an HDD, stores the control program and the application program for the CPU 152, font data used to generate the output information, information to be used on the MFP 150, and the like.

A manipulation unit I/F 155 functions as an interface with a manipulation unit 156, and outputs image data to be displayed to the manipulation unit 156. A user receives information input via the manipulation unit 156. The manipulation unit 156 corresponds to an operation panel or the like on which a switch for manipulation, a light-emitting diode (LED) display device, and the like are located. The printer I/F 157 outputs an image signal as output information to the printer 158 (e.g., printer engine).

A scanner I/F 159 receives an image signal as input information from a scanner 160 (e.g., scanner engine). An external memory I/F 161 (e.g., memory controller) controls access to the external memory 162, such as an HDD and an integrated circuit (IC) card. The number of external memories 162 is not limited to one. At least one external memory 162 is provided, and a plurality of external memories 162 may be connected. Further, an NVRAM (not illustrated) may be provided to store printer mode setting information supplied from the manipulation unit 156. The system bus 163 connects the devices to each other.

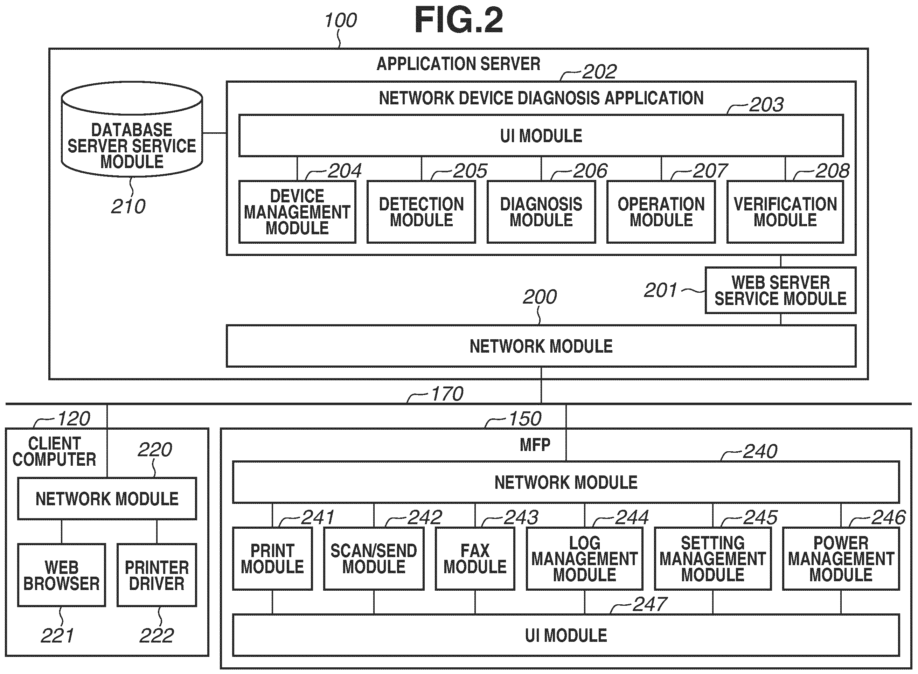

Fig. 2 is a block diagram illustrating a software configuration of the network device diagnosis system according to the present embodiment.

First, a software configuration of the application server 100 will be described. In the application server 100, a network device diagnosis application 202 and modules in the network device diagnosis application 202 are present as files stored in the external memory 110. The network device diagnosis application 202 and the modules are program modules that are loaded into the RAM 102 by the OS or a module using the corresponding module upon execution, and are executed. The network device diagnosis application 202 can be added to the HDD or SSD that is the external memory 110 supplied on demand by the virtualization technique in the cloud computing environment.

A network module 200 establishes network communication with the client computer 120 and the MFP 150 using a communication protocol.

A web server service module 201 provides a service in which a Hypertext Transfer Protocol (HTTP) response is sent upon reception of an HTTP request from a web browser 221 of the client computer 120. As an example of the HTTP response that is sent, web page data stored in the external memory 110 may be returned. Alternatively, a request for generating the HTTP response may be sent to a user interface (UI) module 203 of the network device diagnosis application 202. The UI module 203 provides a UI screen to be described below as a response to an external apparatus (web browser) or the like via a network.

The network device diagnosis application 202 is an application that detects an occurrence of a problem in the MFP 150 connected to the application server 100 via the network 170, and performs diagnosis, operation, and verification.

The network device diagnosis application 202 is implemented as a program that executes processing, for example, in response to a request for a web page provided by the web server service module 201. As described above, the network device diagnosis application 202 and the web server service module 201 implement a web application that detects an occurrence of a problem in the MFP 150 and performs diagnosis, operation, and verification.

The UI module 203 generates an HTTP response in response to a request from the web server service module 201. Further, the UI module 203 receives user input information transmitted from the web browser 221 of the client computer 120, and calls each module as needed. Examples of the module called by the UI module 203 include a device management module 204, a detection module 205, a diagnosis module 206, an operation module 207, and a verification module 208. As a matter of course, the UI module 203 may call any module other than the above-described modules.

The device management module 204 obtains device information and logs from the MFP 150, which is connected to the application server 100 via the network 170, via the network module 200. Any communication protocol can be used to obtain the device information and logs from the MFP 150. An example of the communication protocol used by the device management module 204 is HTTP Secure (HTTPS).

The device management module 204 stores the device information obtained from each module of the MFP 150 in a network device management table 300 or a log management table 301 on a database server service module 210 to be described below. The device management module 204 retrieves the device information from the network device management table 300 or the log management table 301, as needed. The detection module 205 detects a problem that occurs in the MFP 150.

The detection module 205 detects the problem by obtaining the device information and logs from the device management module 204. The diagnosis module 206 diagnoses the program detected by the detection module 205, and displays a UI indicating a diagnosis result via the UI module 203. In this case, information to be used for diagnosis is obtained from a plurality of tables on the database server service module 210 to be described below.

The operation module 207 performs an operation based on the diagnosis result from the diagnosis module 206, and displays a UI indicating an operation result via the UI module 203. Examples of the operation performed by the operation module 207 include a device setting change and a restart for the MFP 150. The operation module 207 issues a device setting change instruction or a restart instruction to the MFP 150, which is connected to the application server 100 via the network 170, via the network module 200 using any communication protocol. An example of the communication protocol used by the operation module 207 is HTTPS.

The verification module 208 verifies whether the problem has been resolved by the operation performed by the operation module 207, and displays a UI indicating a verification result via the UI module 203.

The database server service module 210 manages data and stores and retrieves data in response to a request from another module. The database server service module 210 may be located on a device different from the application server 100 as long as the database server service module 210 is accessible from the network device diagnosis application 202. The database server service module 210 may be a database service in the cloud computing environment.

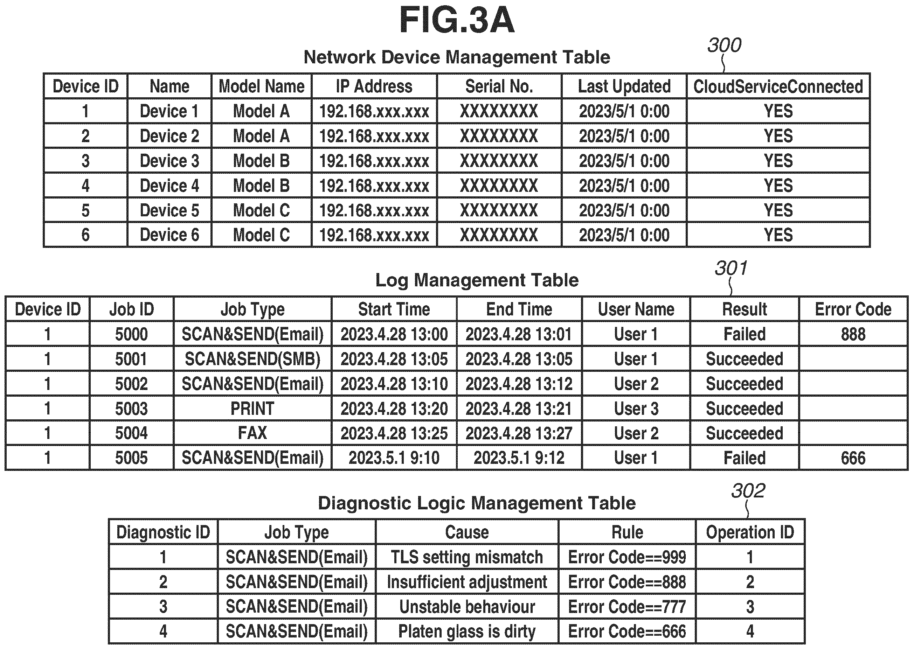

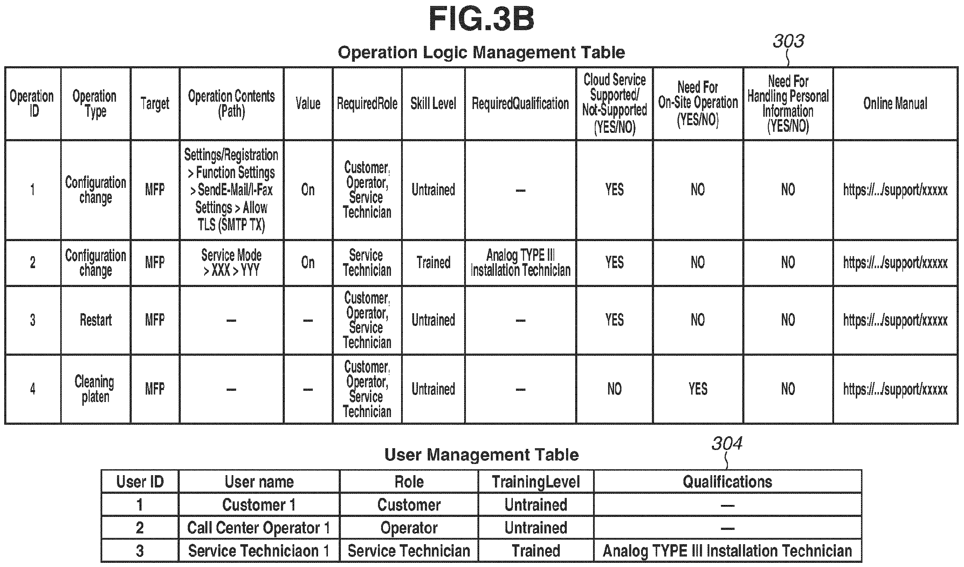

Figs. 3A and 3B illustrate examples of configurations of tables to be managed by the database server service module 210. The table configurations illustrated in Figs. 3A and 3B are merely examples. Any other table configuration different from the table configurations according to the present embodiment may be used.

The network device management table 300 is a table to manage device information about the MFP 150 managed by the network device diagnosis application 202.

Examples of information managed by the network device management table 300 include a network device identifier (Device ID), a device name (Name), a model name (Model Name), an internet protocol (IP) address, a serial number (Serial No.), and a last updated date and time (Last Updated). The network device management table 300 also manages information indicating whether a cloud service is connected (Cloud Service Connected). The network device identifier is an identifier for uniquely identifying the MFP 150. The last updated date and time indicates the last updated date and time when a record is updated with information obtained from the MFP 150.

The log management table 301 is a table to store the logs obtained by the device management module 204 from the MFP 150.

Examples of information managed by the log management table 301 include a network device identifier (Device ID), a job identifier (Job ID), a job type (Job Type), a job execution start date and time (Start Time), a job execution end date and time (End Time), a job execution user name (User Name), a job execution result (Result), and a job execution result error code (Error Code). The term "job" as used herein refers to a processing operation, such as print, scan and send, and FAX, which can be executed by the user on the MFP 150. The job identifier is an identifier for uniquely identifying each job.

A diagnostic logic management table 302 is a table to manage a diagnostic logic used by the diagnosis module 206 to diagnose a problem.

Examples of information managed by the diagnostic logic management table 302 include a diagnostic logic identifier (Diagnostic ID), a job type, cause information (Cause), a diagnosis rule (Rule), and an operation logic identifier (Operation ID). The diagnostic logic identifier is an identifier for uniquely identifying each diagnostic logic. The operation logic identifier is an identifier for uniquely identifying each operation logic. The cause information is information indicating contents of possible causes of the problem obtained as a result of diagnosis. The diagnosis rule is information indicating a logic to be used for diagnosis. The diagnosis module 206 identifies the cause of the problem based on whether the problem matches the diagnosis rule.

An operation logic management table 303 is a table to manage operation logics used by the diagnosis module 206 to display a UI indicating a diagnosis result of the problem and to perform an operation according to a user instruction.

Examples of information managed by the operation logic management table 303 include an operation logic identifier (Operation ID), an operation type (Operation Type), an operation target (Target), operation contents (Path and Value), an access authority (Required Role and Required Training Level), a required qualification (Required Qualification), cloud service supported/not-supported, a need for on-site operation, a need for handling personal information, and (link information about) an online manual.

The operation logic identifier is an identifier for uniquely identifying each operation logic. The operation type indicates information for classifying operation contents, and corresponds to, for example, a device setting change or a restart. The operation target indicates information about a target on which an operation is performed. For example, the operation target corresponds to the MFP 150, another server or network device, or the like.

The operation contents indicate information indicating detailed operation contents. Examples of the operation contents include path information (Path) about settings when a device setting change is performed, and information about each changed value (Value) obtained after an operation is performed on a target item.

As the access authority, information about a user's role (Required Role) and a skill level (Required Training Level) required for the user to execute an operation is defined. Examples of the access authority include user's role information, such as a customer administrator (Customer), a call center operator (Operator), a service technician (Service Technician), and the like, and user's skill level information, such as Trained/Untrained.

The required qualification indicates information about a qualification required of the user to execute an operation. Examples of the required qualification include information about a qualification required for executing an operation, such as a qualification as Analog Type III Installation Technician. The cloud service supported/not-supported indicates information about whether the operation module 207 of the network device diagnosis application 202 supports the execution of an operation. The need for on-site operation indicates information about whether the operation contents include contents that are required to be performed at a location where the MFP 150 is placed. Examples of the operation contents that are required to be performed at the location where the MFP 150 is placed include physical cleaning work performed on a platen glass, and adjustment work while checking a printout document. The need for handling personal information indicates information about whether the operation contents include an operation in which personal information is handled. The online manual link indicates information about a Uniform Resource Locator (URL) link to an online manual page for the MFP 150 that indicates detailed contents of the operation.

A user management table 304 is a table to manage user information used by the diagnosis module 206 to display a UI indicating a diagnosis result of the problem.

Examples of information managed by the user management table 304 include a user identifier (User ID), a user name (User Name), a role (Role), a skill level (Training Level), and obtained qualifications (Qualifications). The user identifier is an identifier for uniquely identifying each user.

Next, a software configuration of the client computer 120 will be described. Each module constituting the client computer 120 is a program module that is present as a file stored in the ROM 103 or the external memory 110. Each module is loaded into the RAM 102 by the OS or a module using the corresponding module upon execution and is executed. A network module 220 establishes network communication with the application server 100 and the MFP 150 using a communication protocol.

The web browser 221 transmits an HTTP request message via the network module 220, and receives and displays an HTTP response message. The client computer 120 accesses the application server 100 and the MFP 150 via the web browser 221. A printer driver 222 creates a print job and transmits the print job to the MFP 150 via the network module 220. The printer driver 222 receives and displays a print job execution result from the MFP 150 via the network module 220.

Next, a software configuration of the MFP 150 will be described. In the MFP 150, various modules are present as files stored in the ROM 154 or the external memory 162, and are loaded into the RAM 153 upon execution and are executed. A network module 240 establishes network communication with the application server 100 and the client computer 120 using a communication protocol.

A print module 241 receives the print job transmitted from the printer driver 222 of the client computer 120 via the network module 240 and executes the print job. Further, the print module 241 creates a log indicating a print job execution result and transmits the log to a log management module 244. A scan/send module 242 receives a scan instruction from the user via a UI module 247, and generates and executes a scan job and a scan data sending job. In this case, for example, an e-mail or a protocol such as Server Message Block (SMB) may be used to send scan data. Further, the scan/send module 242 creates a log indicating a scan job/sending job execution result, and transmits the log to the log management module 244. A FAX module 243 receives a FAX job transmitted from a FAX apparatus (not illustrated), the MFP 150, or the like via the network module 240. The received FAX job is printed via the print module 241, or is transferred to another FAX apparatus, another MFP, or the like. Additionally, the FAX module 243 receives a FAX sending instruction from the user via the UI module 247, and generates and executes a FAX sending job. Further, the FAX module 243 creates a log indicating a FAX receiving job/sending job execution result, and transmits the log to the log management module 244.

The log management module 244 receives a log obtaining request from the device management module 204 of the application server 100 via the network module 240, and returns a log indicating a job execution result.

A setting management module 245 is a module for managing device settings for the MFP 150. The setting management module 245 receives a setting confirmation/change instruction from the user via the UI module 247, and returns and changes the device settings for the MFP 150. The setting management module 245 receives a setting confirmation/change instruction from the operation module 207 of the application server 100 via the network module 240. Then, the setting management module 245 returns and changes the device settings for the MFP 150 according to the received setting confirmation/change instruction.

A power management module 246 is a module for managing a power status of the MFP 150. The power management module 246 receives a power off/restart instruction from the user via the UI module 247, and powers off or restarts the MFP 150. Further, the power management module 246 receives a power off/restart instruction from the operation module 207 of the application server 100 via the network module 240. Then, the power management module 246 powers off or restarts the MFP 150 according to the received power off/restart instruction.

The UI module 247 draws a UI to be displayed on the manipulation unit 156 of the MFP 150 and receives a user input value input by the user manipulating the UI on the manipulation unit 156.

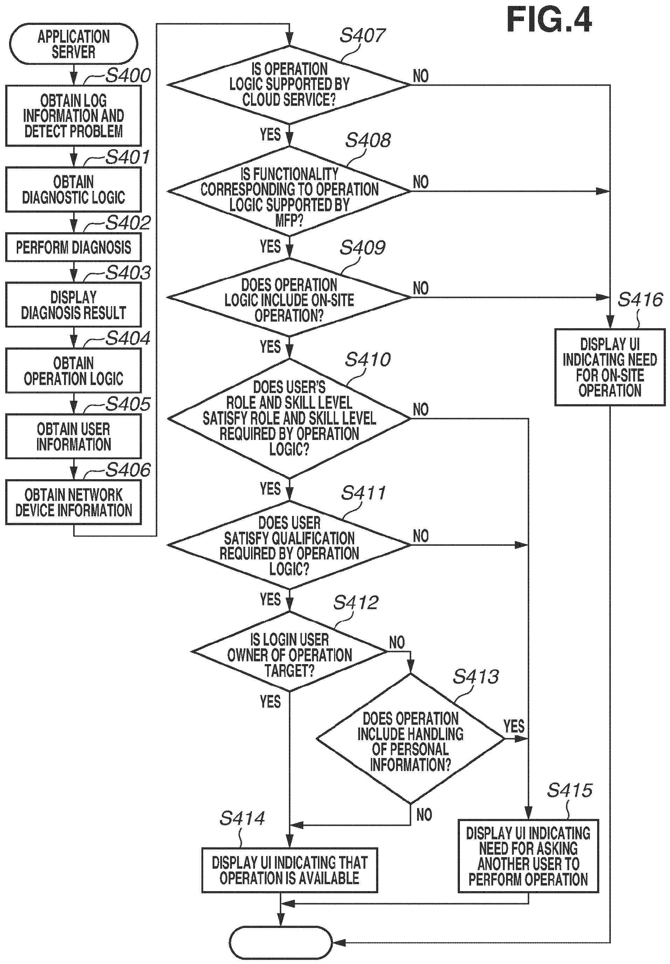

An operation to be performed by the application server 100 when the application server 100 detects and diagnoses a problem occurring in the MFP 150 and displays an available operation means based on a diagnosis result will be described with reference to Fig. 4.

In step S400, the detection module 205 of the application server 100 obtains log information about the MFP 150 from the log management table 301 of the database server service module 210 via the device management module 204. Then, the detection module 205 detects a problem that has occurred in the MFP 150 based on the obtained log information.

In step S401, the diagnosis module 206 obtains a diagnostic logic from the diagnostic logic management table 302 of the database server service module 210. In this case, the diagnostic logic obtained by the diagnosis module 206 includes, for example, a diagnosis rule and an operation logic identifier for uniquely identifying an operation logic to resolve the problem when the diagnosis rule is matched. In step S402, the diagnosis module 206 diagnoses the problem detected by the detection module 205 in step S400 using the diagnostic logic obtained in step S401.

For example, in the present embodiment, the log information about the MFP 150 indicates that an error has occurred in a scanning and e-mail transmission and that the error code is "888", and the diagnostic logic indicates that an insufficient adjustment is a cause of the error. The log information about the MFP 150 also indicates that another error has occurred in the scanning and e-mail transmission and that the error code is "666", and the diagnostic logic indicates that dirt on the platen glass is a cause of the error.

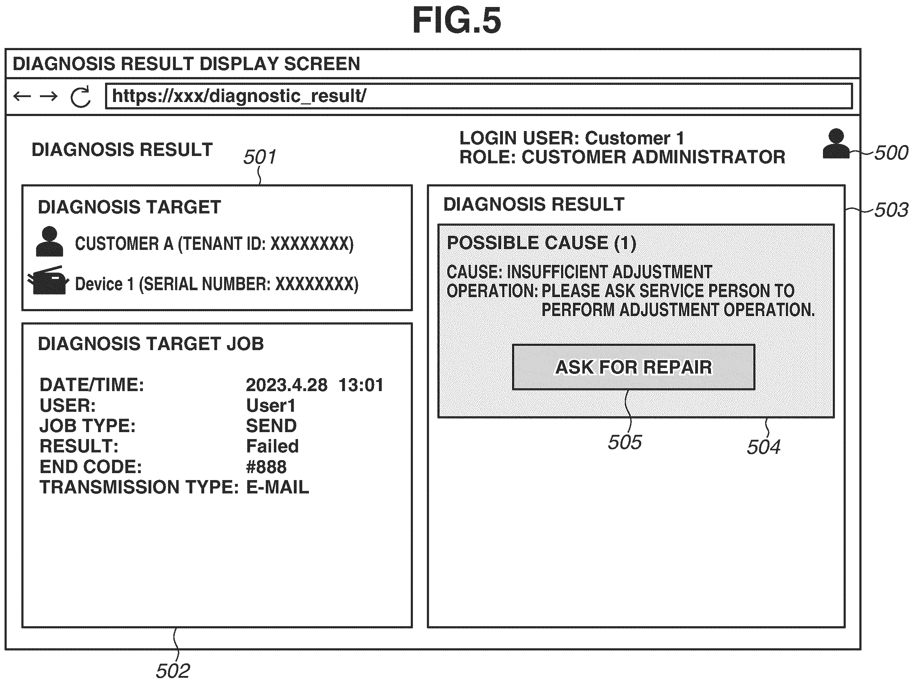

In step S403, the diagnosis module 206 displays a UI indicating a diagnosis result via the III module 203. If the cause of the problem can be uniquely identified as the result of diagnosis performed by the diagnosis module 206, only one cause is displayed. On the other hand, if the cause of the problem cannot be uniquely identified, a plurality of possible causes is displayed. Figs. 5, 6, 7, and 8 illustrate screen examples of a diagnosis result display screen as described below.

In step S404, the diagnosis module 206 obtains an operation logic necessary for resolving the problem from the operation logic management table 303 of the database server service module 210 based on the diagnosis result obtained in step S402. In this case, the operation logic obtained by the diagnosis module 206 includes information indicating, for example, the operation target, the access authority, the required qualification, cloud service supported/not-supported, the need for on-site operation, the need for handling personal information, and the online manual link. In the present embodiment, the operation logic necessary for resolving the problem is obtained using the operation logic identifier included in the diagnostic logic obtained by the diagnosis module 206 in step S401.

In step S405, the diagnosis module 206 obtains user information from the user management table 304 of the database server service module 210. The user information obtained by the diagnosis module 206 includes, for example, user's role information, skill level, and obtained qualifications.

In step S406, the diagnosis module 206 obtains network device information from the network device management table 300 of the database server service module 210 via the device management module 204. In this case, the network device information obtained by the diagnosis module 206 includes, for example, information indicating whether a cloud service is connected.

In step S407, the diagnosis module 206 determines whether the operation logic is supported by the network device diagnosis application 202 using information about the cloud service supported/not-supported included in the operation logic obtained in step S404. If it is determined that the operation logic is supported by the cloud service (YES in step S407), the processing proceeds to step S408. If it is determined that the operation logic is not supported by the cloud service (NO in step S407), the processing proceeds to step S416.

In step S408, the diagnosis module 206 determines whether a functionality corresponding to the operation logic is supported by the MFP 150 using information that indicates whether a cloud service is connected and that is included in the network device information obtained in step S406. The term "functionality" as used herein refers to one or more requirements. Examples of the one or more requirements include a requirement that an application for issuing a remote operation instruction upon reception of a remote operation command has been installed on the MFP 150, a requirement that a firmware version of the MFP 150 is a version that enables the MFP 150 to execute a target operation, and a requirement that the MFP 150 includes hardware for remote operation. If it is determined that the functionality is supported (YES in step S408), the processing proceeds to step S409. If it is determined that the functionality is not supported (NO in step S408), the processing proceeds to step S416.

In step S409, the diagnosis module 206 determines whether the operation logic includes an on-site operation using the information indicating the need for on-site operation included in the operation logic obtained in step S404. If it is determined that the operation logic includes an on-site operation (YES in step S409), the processing proceeds to step S410. If it is determined that the operation logic does not include an on-site operation (NO in step S409), the processing proceeds to step S416.

In step S410, the diagnosis module 206 determines whether the user's role and the skill level satisfy the role and the skill level required by the operation logic. In the determination made by the diagnosis module 206 in step S410, the diagnosis module 206 uses the access authority included in the operation logic obtained in step S404 and the role and the skill level included in the user information obtained in step S405. If it is determined that the user's role and the skill level satisfy the role and the skill level required by the operation logic (YES in step S410), the processing proceeds to step S411. If the user's role and the skill level do not satisfy the role and the skill level required by the operation logic (NO in step S410), the processing proceeds to step S415.

In step S411, the diagnosis module 206 determines whether the user satisfies the qualification required by the operation logic using the information indicating the required qualification included in the operation logic obtained in step S404 and the information indicating the obtained qualifications included in the user information obtained in step S405. If it is determined that the user satisfies the qualification required by the operation logic (YES in step S411), the processing proceeds to step S412. If it is determined that the user does not satisfy the qualification (NO in step S411), the processing proceeds to step S415.

In step S412, the diagnosis module 206 determines whether the login user (e.g., a user who is logged in to the system) is the owner of the operation target using the operation target included in the operation logic obtained in step S404 and the role included in the user information obtained in step S405. If it is determined that the user is the owner of the operation target (YES in step S412), the processing proceeds to step S414. If it is determined that the user is not the owner of the operation target (NO in step S412), the processing proceeds to step S413. In the present embodiment, in a case where the operation target is the MFP 150 and the user's role is the customer administrator, it is determined that the user is the owner of the MFP 150.

In step S413, the diagnosis module 206 determines whether the operation includes an operation related to handling of personal information using the information indicating the need for handling personal information included in the operation logic obtained in step S404. If it is determined that the operation includes an operation related to handling of personal information (YES in step S413), the processing proceeds to step S415. If it is determined that the operation does not include an operation related to handling of personal information (NO in step S413), the processing proceeds to step S414.

In step S414, the diagnosis module 206 displays a III indicating that the operation is available on the diagnosis result display screen via the UI module 203.

In step S415, the diagnosis module 206 displays a III indicating that the operation is unavailable to the login user and it is necessary for the user to ask another user capable of using the operation to perform the operation on the diagnosis result display screen via the UI module 203.

In step S416, the diagnosis module 206 displays a III indicating that the operation needs to be performed at a location where the MFP 150 is placed and contents of the operation to be performed at the location where the MFP 150 is placed.

Figs. 5, 6, 7, and 8 illustrate screen examples of the diagnosis result display screen provided by the diagnosis module 206 via the UI module 203 after the login of the user to the network device diagnosis application 202 is accepted. On the diagnosis result display screen, for example, various buttons are located as examples of an instruction unit configured to receive (e.g., accept) a user input, a mechanical automatic input, and the like.

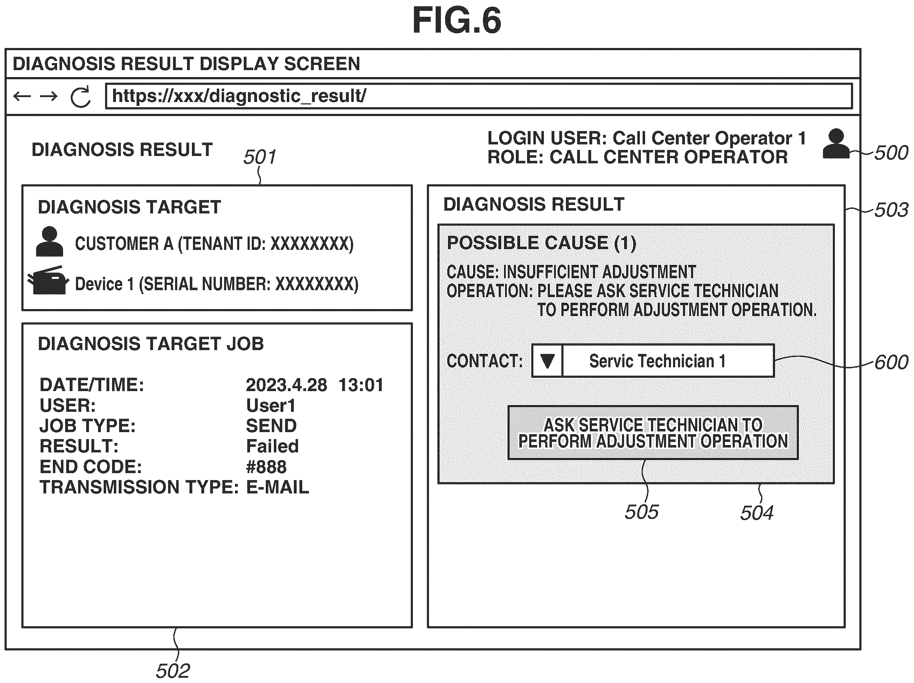

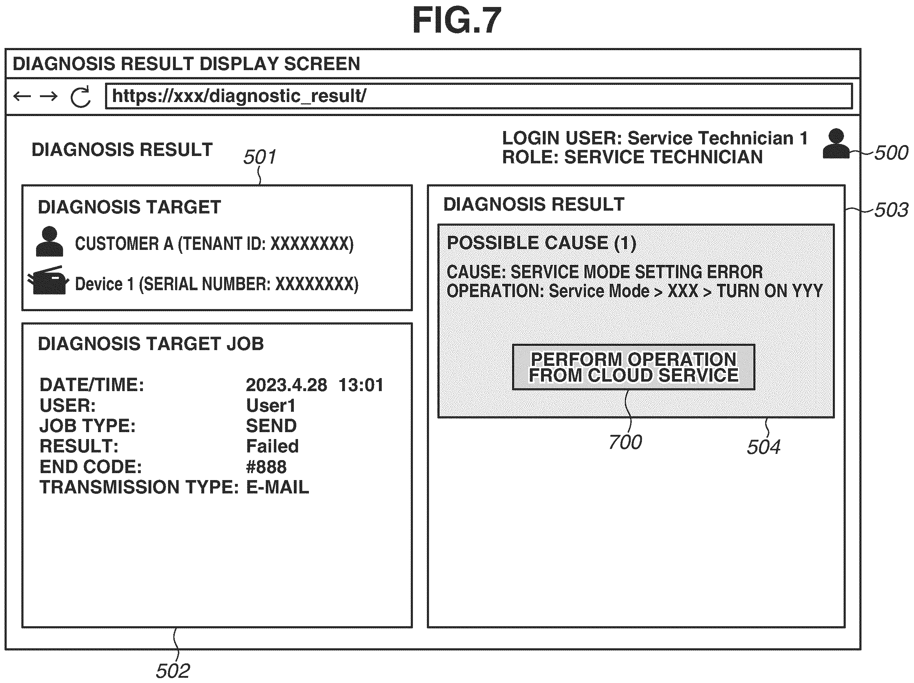

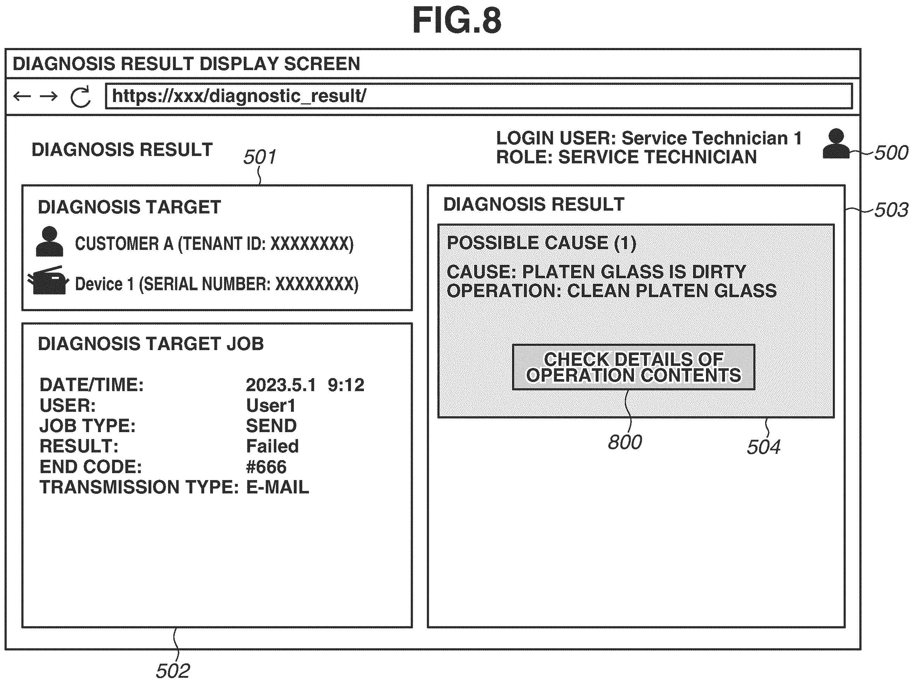

Fig. 5 illustrates a screen example of the diagnosis result display screen when the user having the role of the customer administrator has logged in to the network device diagnosis application 202. Fig. 6 illustrates a screen example of the diagnosis result display screen when the user having the role of the call center operator has logged in to the network device diagnosis application 202. Figs. 7 and 8 illustrate screen examples of the diagnosis result display screen when the user having the role of the service technician has logged in to the network device diagnosis application 202.

Figs. 5 and 6 illustrate screen examples of the diagnosis result display screen on which the diagnosis module 206 displays a UI indicating that the operation is unavailable to the login user and it is necessary for the user to ask another user capable of using the operation to perform the operation via the III module 203 in step S415.

Fig. 7 illustrates the screen example of the diagnosis result display screen on which the diagnosis module 206 displays a UI indicating that the operation is available via the UI module 203 in step S414. Fig. 8 illustrates the screen example of the diagnosis result display screen on which the diagnosis module 206 displays a III indicating that the operation needs to be performed at a location where the MFP 150 is placed and contents of the operation to be performed at the location where the MFP 150 is located in step S416.

A login user information display unit 500 displays information about the user logged in to the network device diagnosis application 202.

A diagnosis target display unit 501 displays information about the MFP 150 to be diagnosed and a customer who owns the MFP 150. A diagnosis target job display unit 502 displays the log information about the MFP 150 that is obtained and detected by the detection module 205 in step S400 as a diagnosis target job.

A diagnosis result display unit 503 displays the result of diagnosis performed by the diagnosis module 206 in step S402. A diagnosis result cause/operation display unit 504 displays at least one set of a cause identified as the result of diagnosis performed by the diagnosis module 206 in step S402 and an operation.

If the cause of the problem can be uniquely identified as the result of diagnosis performed by the diagnosis module 206, the diagnosis result cause/operation display unit 504 displays only one set of the cause and the operation. On the other hand, if the cause of the problem cannot be uniquely identified, a plurality of sets of possible causes and operations is displayed. The screen example indicates that the cause of the problem is uniquely identified, and thus only one set of the cause and the operation is displayed.

If an operation request button 505 is clicked, the UI transitions to a screen for requesting another user capable of executing the operation to perform the operation. If the diagnosis module 206 determines that the operation means is available in steps S407 to S413, the operation request button 505 is displayed in a disabled state. If the diagnosis module 206 determines that an operation request can be made even though the operation means is unavailable, the operation request button 505 is displayed in an enabled state.

When an operation button 700 illustrated in Fig. 7 is clicked, the UI transitions to a screen for instructing the target network device to perform a remote operation from a cloud service via a network. If the diagnosis module 206 determines that the operation means is available in steps S407 to S413, the operation button 700 is displayed in the enabled state. If the diagnosis module 206 determines that the operation means is unavailable, the operation button 700 is displayed in the disabled state.

The display of the enabled state or the disabled state of the operation request button 505 and the operation button 700 varies depending on the role, skill level, required qualification, and the like of the user logged in to the network device diagnosis application 202. In Fig. 5, the operation is unavailable to the login user having the role of the customer administrator, so that the operation button 700 is hidden and the operation request button 505 is displayed in the enabled state to request a service technician capable of using the operation to perform the operation. Examples of the operation request made to the service technician on the screen to which the UI transitions when the operation request button 505 illustrated in Fig. 5 is clicked include, for example, making a call to a call center or a service technician, e-mail transmission, and transmission of a repair request.

In Fig. 6 as well, the operation is unavailable to the login user having the role of the call center operator, so that the operation button 700 is hidden and the operation request button 505 is displayed in the enabled state to request a service technician capable of using the operation to perform the operation.

In Fig. 6, with a service technician selection unit 600, the call center operator can select a service technician to whom the call center operator requests to perform the operation. Examples of the operation request to the service technician on the screen to which the UI transitions when the operation request button 505 is clicked in Fig. 6 include making a call to a service technician, e-mail transmission, and transmission of a repair request.

In Fig. 7, the operation is available to the login user having the role of the service technician, so that the operation button 700 is displayed in the enabled state, and instead the operation request button 505 is hidden.

In Fig. 8, the operation needs to be performed at a location where the MFP 150 is placed, so that both the operation request button 505 and the operation button 700 are displayed in the disabled state, while an on-site operation contents confirmation button 800 is displayed. When the on-site operation contents confirmation button 800 is clicked, the UI transitions to a screen for explaining detailed contents of the operation to be performed at the location where the MFP 150 is placed. When the on-site operation contents confirmation button 800 is clicked, for example, the UI may transition to an operation explanation page of the online manual using the online manual link included in the operation logic obtained by the diagnosis module 206 in step S404.

The above-described processing enables the application server 100 to diagnose a problem that has occurred in the MFP 150 and to check whether MFP 150 includes a remote operation means and whether a user account profile indicates that the user has an execute authority in a case where an available operation means is displayed based on a diagnosis result.

Consequently, the operation means or an operation requesting means can be appropriately displayed in consideration of whether the MFP 150 includes the remote operation means and whether the user account profile indicates that the user has the execute authority.

In the first example embodiment, whether the user account profile indicates that the user has the execute authority is determined using static information, such as the user's role, skill level, and obtained qualifications.

In a second example embodiment, an example is described where the user's skill level is dynamically calculated based on a previous operation execution history to determine whether the user account profile indicates that the user has an execute authority. A system configuration, a hardware configuration, and a software configuration of the network device diagnosis system according to the second example embodiment are similar to those of the first example embodiment illustrated in Figs. 1 and 2, and thus descriptions thereof are omitted.

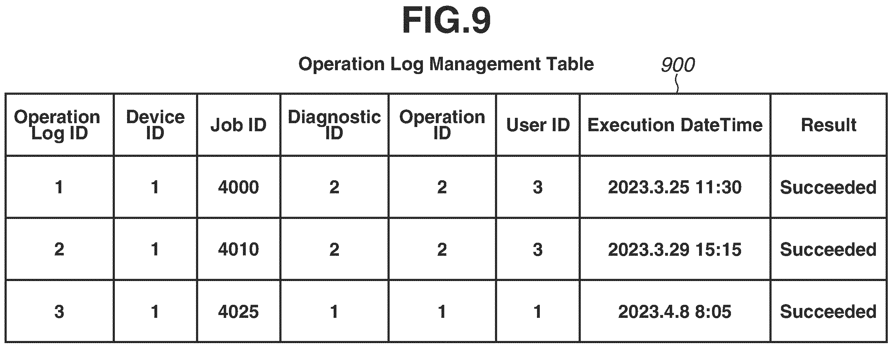

Fig. 9 illustrates an example of a part of a table configuration in the database server service module 210 of the application server 100. The table configuration illustrated in Fig. 9 is merely an example, and a table configuration different from the table configuration according to the present embodiment may be used. Although not illustrated in Fig. 9, the tables 300 to 304 illustrated in Figs. 3A and 3B are also managed. In the example illustrated in Fig. 9, a table 900 is also managed.

The table 900 is an operation log management table for managing the contents and results of operations performed on the MFP 150 by the network device diagnosis application 202 as logs.

Examples of information managed by the operation log management table 900 include an operation log identifier (Operation Log ID), a network device identifier (Device ID), a job identifier (Job ID), a diagnostic logic identifier (Diagnostic ID), an operation logic identifier (Operation ID), a user identifier (User ID), an operation execution date and time (Execution Date Time), and an operation result (Result). The operation log identifier is an identifier for uniquely identifying each operation log. The operation result indicates information about an operation result, such as whether an operation has been executed, and whether an execution result is successful in a case where the operation has been executed.

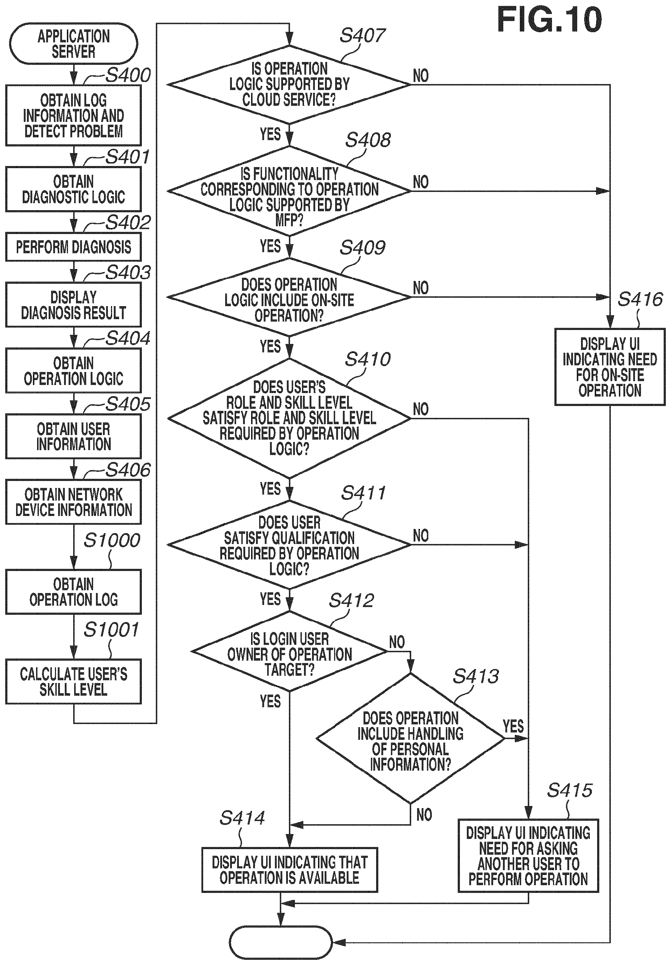

An operation to be performed by the application server 100 when the application server 100 detects and diagnoses a problem that has occurred in the MFP 150, and displays an available operation means based on a diagnosis result will be described with reference to Fig. 10. Processing of steps S400 to S416 is similar to that of Fig. 4 according to the first example embodiment, and thus description thereof is omitted.

In step S1000, the diagnosis module 206 of the application server 100 obtains an operation log from the operation log management table 900 of the database server service module 210.

In step S1001, the diagnosis module 206 calculates the user's skill level based on the operation log obtained in step S1000. The skill level is calculated to be high, for example, if the user has successfully executed an operation on the device or a device of the same type previously. Alternatively, if a user having the same role as the user has successfully executed the same operation on the device or a device of the same type previously, the skill level may be calculated to be high. Alternatively, the skill level may be calculated to be high depending on the number of times the same operation has been successfully executed on the device or a device of the same type previously. The user's skill level calculated in step S1001 is used in step S410 in which the diagnosis module 206 determines whether the user satisfies the skill level required by the operation logic.

The above-described processing makes it possible to dynamically calculate the user's skill level based on the previous operation execution history in the case of performing an operation for restoring a network device after resolving the problem in the network device. The determination as to whether the user account profile indicates that the user has an execute authority based on the user's skill level dynamically calculated makes it possible to appropriately display the operation means or the operation requesting means according to the user's skill level that varies with time.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}, a flash memory device, a memory card, and the like.

According to an aspect of the present disclosure, it is possible to appropriately provide an operation procedure or a mechanism for requesting an operation based on a diagnosis result from a network device in consideration of capabilities of a target device or a profile of each person in charge of the operation.

While the present disclosure has been described with reference to example embodiments, it is to be understood that the disclosure is not limited to the disclosed example embodiments. The scope of the following claims encompasses all such modifications and equivalent structures and functions.

## Claims

1. A remote system for a network device diagnosis system that diagnoses an abnormality in a network device, the remote system comprising:
an acceptance means for accepting a login of a user to the remote system; and
a provision means for providing a user having logged in to the remote system with a diagnosis result screen for the network device,
wherein, on the diagnosis result screen, in a case where the network device supports acceptance of an operation via a network and an authority of the logged in user is an authority required to execute an operation necessary for the network device, control for accepting an instruction of the operation via the network is executed.

2. The remote system according to claim 1, wherein the authority of the logged in user includes at least one of a role or a skill level of the logged in user.

3. The remote system according to claim 2, wherein, on the diagnosis result screen, another control for accepting an instruction to request another user having a role different from the role of the logged in user to perform the operation is executed on a basis that the operation necessary for the network device is unavailable with the authority of the logged in user.

4. The remote system according to any one of claims 1 to 3, wherein, on the diagnosis result screen, another control for accepting an instruction to provide a screen to explain detailed contents of the operation is executed on a basis that the operation necessary for the network device is an operation required to be performed at a location where the network device is placed.

5. A method for a remote system for a network device diagnosis system that diagnoses an abnormality in a network device, the method comprising:
accepting login of a user to the remote system; and
providing a logged in user having logged in to the remote system with a diagnosis result screen for the network device,
wherein, on the diagnosis result screen, in a case where the network device supports acceptance of an operation via a network and an authority of the logged in user is an authority required to execute an operation necessary for the network device, control for accepting an instruction of the operation via the network is executed.

6. The method according to claim 5, wherein the authority of the logged in user includes at least one of a role or a skill level of the logged in user.

7. The method according to claim 6, wherein, on the diagnosis result screen, another control for accepting an instruction to request another user having a role different from the role of the logged in user to perform the operation is executed on a basis that the operation necessary for the network device is unavailable with the authority of the logged in user.

8. The method according to any one of claims 5 to 7, wherein, on the diagnosis result screen, another control for accepting an instruction to provide a screen to explain detailed contents of the operation is executed on a basis that the operation necessary for the network device is an operation required to be performed at a location where the network device is placed.
